# EUROPEAN PATENT APPLICATION

(11) **EP 2 634 768 A1**
(43) Date of publication of application: **04.09.2013**
(21) Application number: 11836147.6
(22) Date of filing: 21.10.2011
(51) Int. Cl.: G09G 3/36, G02F 1/133, G09G 3/20, H04N 9/30

(54) **DISPLAY DEVICE**

(30) Priority: 20.10.2011 JP 2011230263; 26.10.2010 JP 2010239196
(71) Applicant: Sharp Kabushiki Kaisha, Osaka-shi, Osaka 545-8522 (JP)
(72) Inventor: NOUTOSHI, Tomoharu, Osaka-shi, Osaka 545-8522 (JP); FUJINE, Toshiyuki, Osaka-shi, Osaka 545-8522 (JP)
(74) Representative: Müller - Hoffmann & Partner
(86) International application number: PCT/JP2011/074254
(87) International publication number: WO 2012/057013

(57) **Abstract**

Provided is a display device compatible with RGBY, RGBW, and other multiple primary color displays, wherein a desired luminance ratio of primary colors to white can be obtained. The display device comprises: a display panel that displays images using pixels that include sub-pixels composed of 4 or more primary colors; and a signal adjustment portion (3) that adjusts image signals composed of luminance signals and color difference signals, such that the luminance ratio of primary colors to white when displaying images on the display panel approaches a value that is determined in a predetermined image signal format. The signal adjustment portion (3) comprises: a luminance gamma adjustment portion (33) that adjusts the gamma of luminance signals and reduces luminance levels; a color gain adjustment portion (34) that increases the color gain of color difference signals, for image signals for which the luminance levels of luminance signals has been reduced; and a CMS portion (35) that adjusts the gain for each color component of color difference signals such that the luminance ratio of primary colors to white becomes closer to a value that is determined in a predetermined image signal format for image signals in which the color difference signal color gain has been increased.

## Description

### TECHNICAL FIELD

The present invention relates to a display device, and more particularly to a display device dealing with multi-primary color display of RGBY, RGBW, and the like.

### BACKGROUND OF THE INVENTION

As a display means for displaying information or a video image, various types of displays have conventionally been commercialized for forming an image using pixels. In a common display, for example, one pixel is composed of sub-pixels (sub pixels) of three primary colors comprised of red (R), green (G), and blue (B), thereby performing color display. These sub-pixels are normally realized by using a color filter. In such a color display technique, expansion of a color reproduction range has recently been examined in order to improve display quality.

On the other hand, a so-called multi-primary color display has been developed, which is capable of expanding a region on a chromaticity diagram (in the case of a chromatic color) and improving luminance efficiency (in the case of white) by increasing the number of primary colors to four or more with use of a new color other than three primary colors. For example, Patent Document 1 describes an RGBW type liquid crystal display device capable of displaying an image with appropriate luminance. The device is configured, in determining luminance of a liquid crystal panel, to separately and appropriately control luminance of pixels in a transparent filter portion corresponding to white (W) based on predetermined calculation, thereby improving luminance of an image which is output from the liquid crystal panel.

### PRIOR ART DOCUMENT

### PATENT DOCUMENTS

[Patent Document 1] Japanese Laid-Open Patent Publication No. 2001-154636

### SUMMARY OF THE INVENTION

### PROBLEM TO BE SOLVED BY THE INVENTION

However, although the RGBW type liquid crystal display device recited in the above-described Patent Document 1 allows white luminance to be increased by adding W to RGB three primary colors, luminance per sub-pixel is reduced compared to an RGB type liquid crystal display device, and thus luminance of RGB three primary colors is decreased. Such a problematic decreased primary color luminance of a multi-primary color display will be described below.

There are roughly two kinds of causes of the decreased primary color luminance of a multi-primary color display, and the first cause is that an aperture ratio is decreased, that is to say, as the number of primary colors is increased, an area per one sub-pixel is reduced, and luminance per sub-pixel is thus decreased, accordingly. In this case, it is possible to increase luminance by a method of increasing an aperture ratio of a liquid crystal panel by raising drive voltage of a liquid crystal, a method of increasing luminance of a backlight by changing current supplied to a backlight or backlight duty, or the like. Additionally, the second cause is that white balance changes, that is to say, as the number of primary colors is increased, a contribution ratio to white per one primary color is reduced, and luminance per sub-pixel is thus decreased, accordingly.

For example, in the case of an RGB three-color system, when maximum white luminance is 100, luminance of each primary color is provided as, for example, R:20, G:70, and B:10 (R + G + B = 100). On the other hand, maximum white luminance of 100 in the case of an RGBW four-color system results in, for example, R: 10, G:35, B:5, and W:50 (R + G + B + W = 100), where a ratio of each primary color to white is decreased, and thus primary colors are dimmed. Additionally, mixed colors are different from colors intended by video image signals. That is, balance between white and primary colors is changed and luminance per sub-pixel is decreased.

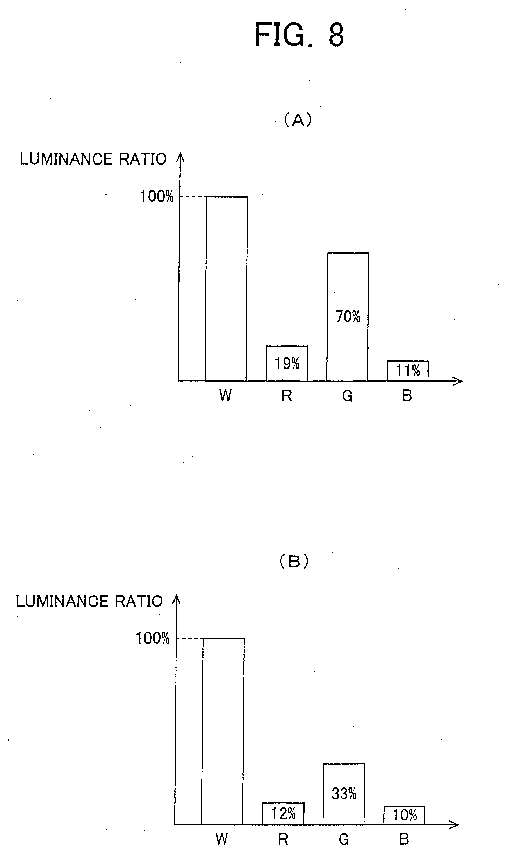

Fig. 8 is a diagram for explaining difference in a luminance ratio of primary colors to white between a three-primary-color display and a four-primary-color display. Fig. 8(A) is a diagram showing a ratio of primary color to white for a three-primary-color display while Fig. 8 (B) is a diagram showing an example of a ratio of primary color to white for a four-primary-color display. When a ratio of W to the other colors in four primary colors is different, numerical values in Fig. 8(B) are different, accordingly. The example of Fig. 8(A) shows a ratio of primary color to white for RGB three primary colors based on ITU-R.BT 709 standard as one of video signal formats, in which, when white luminance is 100 %, the luminance ratio of red (R) is 19 %, the luminance ratio of green (G) is 70 %, and the luminance ratio of blue (B) is 11 %.

On the other hand, the example of Fig. 8(B) shows a ratio of primary color to white for RGB three primary colors in a four-primary-color display, in which when white luminance is 100 %, the luminance ratio of red (R) is 12 %, the luminance ratio of green (G) is 33 %, and the luminance ratio of blue (B) is 10 %, and it can be seen that the primary color luminance ratios of red (R) and green (G) are lower compared to the case of the three-primary-color display of Fig. 8 (A). Thus, there is a problem that, when a multi-primary color display of four primary colors or the like is provided, a ratio of primary color to white is decreased compared to a three-primary-color display.

The present invention has been devised in view of the above-described circumstances, and an object thereof is to allow a display device corresponding to multi-primary color display of RGBY, RGBW, and the like to obtain a desired ratio of primary color to white.

### MEANS FOR SOLVING THE PROBLEM

To solve the above problems, a first technical means of the present invention is a display device comprising a display panel which displays a video image using pixels that include sub-pixels composed of four or more primary colors, wherein a luminance ratio of primary colors to white at the time of displaying a video image on the display panel is a value adjusted so as to approach a value that is determined in a predetermined video signal format.

A second technical means of the present invention is the display device of the first technical means, further comprising a signal conditioning portion which adjusts a video signal composed of a luminance signal and a color difference signal so that the luminance ratio of primary colors to white at the time of displaying a video image on the display panel approaches the value that is determined in a predetermined video signal format, wherein the signal conditioning portion includes a luminance level adjustment portion which adjusts gamma or gain of a luminance signal composing the video signal to reduce a luminance level of the luminance signal; a first color gain adjustment portion which increases color gain of the color difference signal composing the video signal; and a second color gain adjustment portion which adjusts gain for each color component of the color difference signal.

A third technical means of the present invention is the display device of the second technical means, wherein the signal conditioning portion adjusts the luminance ratio of primary colors to white at the time of displaying the video image on the display panel according to a user operation.

A fourth technical means of the present invention is the display device of the second or third technical means, wherein the first color gain adjustment portion increases color gain of the color difference signal composing the video signal for the video signal in which the luminance level of the luminance signal is reduced by the luminance level adjustment portion.

A fifth technical means of the present invention is the display device of the fourth technical means, wherein the second color gain adjustment portion adjusts gain for each color component of the color difference signal and adjusts so that the luminance ratio of primary colors to white approaches the value that is determined in the predetermined video signal format for the video signal in which the color gain of the color difference signal is increased by the first color gain adjustment portion.

A sixth technical means of the present invention is the display device of any one of the second to the fifth technical means, wherein the signal conditioning portion includes an RGB/YCbCr conversion portion which converts an RGB signal into an YCbCr signal when the RGB signal is input; and a YCbCr/RGB conversion portion which converts the YCbCr signal adjusted so that the luminance ratio of primary colors to white approaches the value that is determined in the predetermined video signal format into the RGB signal.

A seventh technical means of the present invention is the display device of any one of the second to the sixth technical means, wherein the luminance level of the luminance signal is reduced by the luminance level adjustment portion so that white luminance on a screen of the display panel is equal to or more than a predetermined value.

An eighth technical means of the present invention is the display device of any one of the second to the seventh technical means, including a primary color luminance ratio calculation portion which calculates the luminance ratio of primary colors to white based on a result of signal conditioning of each of the luminance level adjustment portion, the first color gain adjustment portion and the second color gain adjustment portion, wherein the signal conditioning is allowed to be performed for each of the luminance level adjustment portion, the first color gain adjustment portion and the second color gain adjustment portion while displaying a calculation result by the primary color luminance ratio calculation portion.

A ninth technical means of the present invention is the display device of any one of the first to the eighth technical means, wherein the value that is determined in the predetermined video signal format is a luminance ratio of primary colors to white in ITU-R.BT 709 standard.

A tenth technical means of the present invention is the display device of any one of the first to the ninth technical means, wherein the sub-pixels included in the pixel include at least RGB three primary colors, and the luminance ratio of primary colors to white is a luminance ratio of the RGB three primary colors.

### EFFECTS OF THE INVENTION

According to the present invention, in a display device corresponding to multi-primary color display of RGBY, RGBW, and the like, it is possible to relatively change a ratio of primary color to white by applying various types of signal conditioning processing, thus making it possible to obtain a desired primary color luminance ratio.

### BRIEF DESCRIPTION OF DRAWINGS

[Fig. 1] Fig. 1 is a block diagram showing a configuration example of a display device according to an embodiment of the present invention.
[Fig. 2] FIG. 2 is a diagram schematically showing a configuration example of a display portion.
[Fig. 3] Fig. 3 is a diagram showing a configuration example of each sub pixel forming portion shown in Fig. 2.
[Fig. 4] Fig. 4 is a block diagram showing a configuration example of a signal conditioning portion.
[Fig. 5] Fig. 5 is a diagram for explaining an example of a primary color luminance ratio adjustment method by the signal conditioning portion.
[Fig. 6] Fig. 6 is a diagram showing an example of correspondence relation between a primary color luminance ratio and white luminance when a luminance signal is compressed in a varied ratio.
[Fig. 7] Fig. 7 is a diagram showing an example of a dialogue screen for allowing a user to select luminance and a primary color luminance ratio.
[Fig. 8] Fig. 8 is a diagram for explaining difference in a primary color luminance ratio between a three-primary-color display and a four-primary-color display.

### PREFERRED EMBODIMENT OF THE INVENTION

Hereinafter, description will be given for preferred embodiments according to a display device of the present invention with reference to the accompanying drawings.

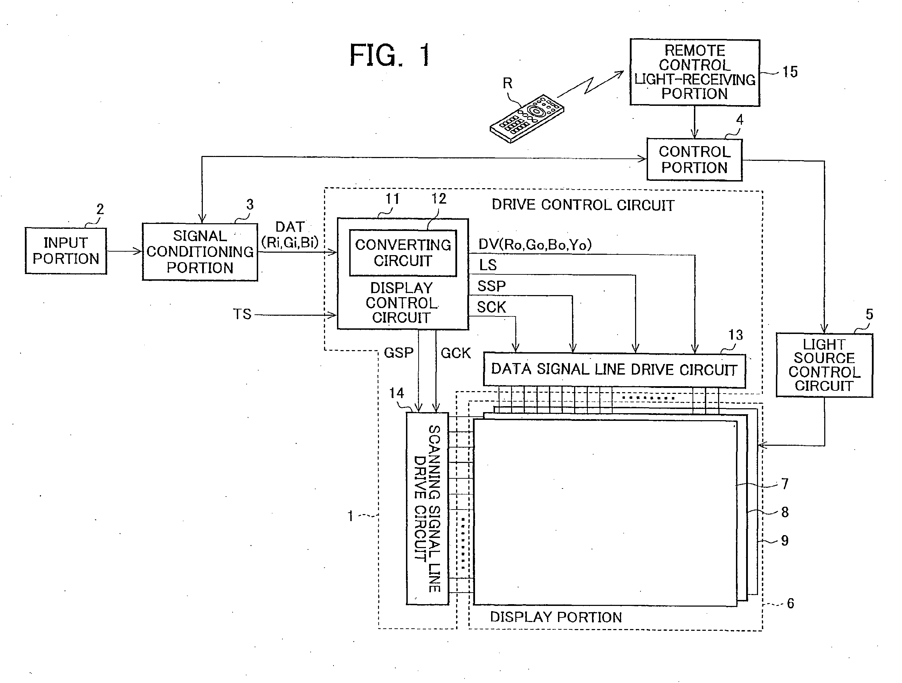

Fig. 1 is a block diagram showing a configuration example of a display device according to an embodiment of the present invention. As the display device in this example, an RGBY (red, green, blue and yellow) type liquid crystal display device will be described as a representative example, however, each of other multi-primary color displays in an RGBW (red, green, blue and white) type, an RGBC (red, green, blue and cyan) type, and the like also has the same basic configuration. This liquid crystal display device is roughly comprised of a drive control circuit 1, an input portion 2, a signal conditioning portion 3, a control portion 4, a light source control circuit 5, and a display portion 6. The display portion 6 is provided with an active matrix type color display panel, and the drive control circuit 1 generates a driving signal for driving the display portion 6.

The input portion 2 is an external interface for connecting a tuner for receiving a digital broadcast signal to input a video signal included in the digital broadcast signal, or an external equipment such as a game machine, a player, a recorder and a PC (personal computer) to input the video signal from the external equipment. The signal conditioning portion 3 is a circuit for applying various types of signal conditioning processing to the video signal input from the input portion 2. The control portion 4 is comprised of a CPU, a memory and the like for controlling movement of the liquid crystal display device. Note that, the signal conditioning portion 3 may be configured integrally with the control portion 4. The light source control circuit 5 controls electric power supplied to a backlight light source constituting the display portion 6 in accordance with a control command from the control portion 4 to adjust luminance of the backlight light source.

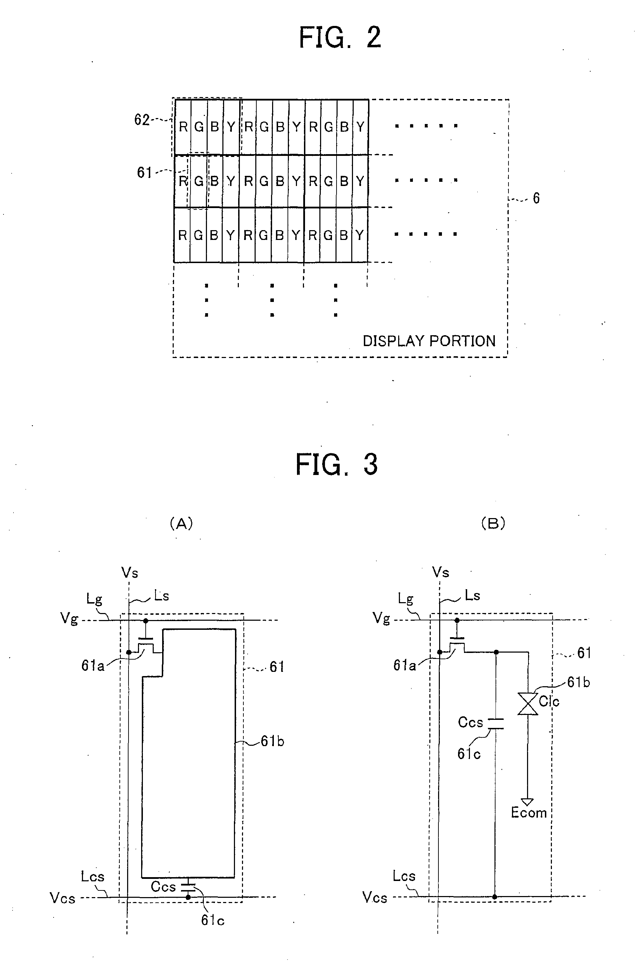

The display portion 6 is comprised of a color filter 7, a liquid crystal panel main body 8, and a backlight light source 9. In the liquid crystal panel main body 8, as shown in Fig. 3 described below, a plurality of data signal lines Ls, and a plurality of scanning signal lines Lg intersecting with a plurality of the data signal lines Ls are formed. The liquid crystal panel main body 8 and the color filter 7 constitute a color liquid crystal panel including a plurality of pixel forming portions arranged in a matrix state. The backlight light source 9 may be an LED (Light Emitting Diode), a cold cathode fluorescent lamp (CCFL), or the like, for example.

Fig. 2 is a diagram schematically showing a configuration example of the display portion 6. Each pixel forming portion 62 at the display portion 6 is comprised of an R sub pixel forming portion 61, a G sub pixel forming portion 61, a B sub pixel forming portion 61, and a Y sub pixel forming portion 61 corresponding to red (R) , green (G) , blue (B) and yellow (Y) , respectively, in which each pixel of a color image displayed by the display portion 6 is composed of an R sub pixel, a G sub pixel, a B sub pixel and a Y sub pixel corresponding to red, green, blue and yellow, respectively. Note that, the above sub pixel has the same meaning as a sub-pixel. Hereinafter, sub pixels included in each pixel contain at least three primary colors of red (R), green (G) and blue (B), and a luminance ratio of the RGB three primary colors will be illustrated as a ratio of primary color to white.

Fig. 3 is a diagram showing a configuration example of each sub pixel forming portion shown in Fig. 2. Fig. 3 (A) is a diagram showing an electrical configuration of one of the sub pixel forming portions 61 in the display portion 6, and Fig. 3 (B) is an equivalent circuit diagram showing an electrical configuration of the sub pixel forming portion 61. As shown in Fig. 2 and Fig. 3, each pixel forming portion 62 is comprised of the same number of sub pixel forming portions 61 as the number of primary colors for displaying a color image, and each sub pixel forming portion 61 is provided corresponding to an intersection of a plurality of data signal lines Ls and a plurality of scanning signal lines Lg. Moreover, an auxiliary capacitance line Lcs arranged parallel to each scanning signal line Lg is provided and a common electrode Ecom common to all the sub pixel forming portions 61 is provided.

In Fig. 3, each sub pixel forming portion 61 includes a thin film transistor (TFT) 61a as a switching element having a gate terminal connected to the scanning signal line Lg passing an intersection corresponding thereto, as well as having a source terminal connected to the data signal lines Ls passing the intersection; a pixel electrode 61b connected to a drain terminal of the TFT 61a; and an auxiliary electrode 61c arranged holding with the pixel electrode 61b an auxiliary capacitance Ccs so as to be formed therebetween. Further, each sub pixel forming portion 61 includes the common electrode Ecom commonly provided in all the sub pixel forming portions 61, and a liquid crystal layer as an electro-optic element held between the pixel electrode 61b and the common electrode Ecom commonly provided in all the sub pixel forming portions 61, in which a liquid crystal capacitance Clc is formed from the pixel electrode 61b, the common electrode Ecom, and the liquid crystal layer held therebetween.

The drive control circuit 1 is provided with a display control circuit 11, a data signal line drive circuit 13 and a scanning signal line drive circuit 14. The display control circuit 11 receives a data signal DAT (Ri, Gi, Bi) from the input portion 2 and a timing control signal TS from a not-shown timing controller, and outputs a digital video signal DV (Ro, Go, Bo, Yo) , a data start pulse signal SSP, a data clock signal SCK, a latch strobe signal LS, a gate start pulse signal GSP, a gate clock signal GCK, and the like.

As shown in Fig. 2, each sub pixel forming portion 61 of the display portion 6 is comprised of an R sub pixel forming portion, a G sub pixel forming portion, a B sub pixel forming portion, and a Y sub pixel forming portion corresponding to red, green, blue and yellow, respectively, while the data signal DAT is composed of three primary color signals corresponding to three primary colors of red, green and blue (Ri, Gi, Bi), respectively. The display control circuit 11 is provided with a converting circuit 12 for converting the input primary color signals corresponding to RGB three primary colors (Ri, Gi, Bi) into the output primary color signals corresponding to four RGBY primary colors (Ro, Go, Bo, Yo). The digital video signal DV is composed of the output primary color signals (Ro, Go, Bo, Yo) to be output from the converting circuit 12, which allows to display a color image to be displayed on the display portion 6.

Further, the above-described data start pulse signal SSP, data clock signal SCK, latch strobe signal LS, gate start pulse signal GSP, gate clock signal GCK and the like are timing signals for controlling timing for displaying an image on the display portion 6.

The data signal line drive circuit 13 receives the digital image signal DV (Ro, Go, Bo, Yo) , the data start pulse signal SSP, the data clock signal SCK and the latch strobe signal LS output from the display control circuit 11, and applies data signal voltage Vs as a driving signal to each data signal line Ls for charging pixel capacity (Clc + Ccs) in each sub pixel forming portion 61 in the display portion 6. At the time, in the data signal line drive circuit 13, the digital video signal DV indicating voltage to be applied to each data signal line Ls is sequentially held at the time of generating a pulse of the data clock signal SCK. Then, at the time of generating a pulse of the latch strobe signal LS, the digital video signal DV described above is converted into analog voltage to be concurrently applied to all the data signal lines Ls in the display portion 6 as the data signal voltage Vs.

In the embodiment, the data signal line drive circuit 13 generates analog voltage corresponding to the primary color signals Ro, Go, Bo and Yo which form the digital video signal DV as the data signal voltage Vs, and applies the data signal voltage Vs corresponding to the red primary color signal Ro to the data signal lines Ls connected to the R sub pixel forming portion 61, the data signal voltage Vs corresponding to the green primary color signal Go to the data signal line Ls connected to the G sub pixel forming portion 61, the data signal voltage Vs corresponding to the blue primary color signal Bo to the data signal line Ls connected to the B sub pixel forming portion 61, and the data signal voltage Vs corresponding to the yellow primary color signal Yo to the data signal line Ls connected to the Y sub pixel forming portion 61.

The scanning signal line drive circuit 14 sequentially applies an active scanning signal (scanning signal voltage Vg for turning on the TFT 61a) to the scanning signal line Lg in the display portion 6 based on the gate start pulse signal GSP and the gate clock signal GCK output from the display control circuit 11.

The drive control circuit 1 also includes auxiliary electrode drive circuit and common electrode drive circuit (not-shown). Predetermined auxiliary electrode voltage Vcs is applied to each auxiliary capacitance line Lcs from the auxiliary electrode drive circuit, and predetermined common voltage Vcom is applied to the common electrode Ecom from the common electrode drive circuit. Note that, the auxiliary electrode voltage Vcs and the common voltage Vcom may be provided as the same voltage while the auxiliary electrode drive circuit and the common electrode drive circuit may be provided in common.

As described above, at the display portion 6, the data signal voltage Vs, the scanning signal voltage Vg, the common voltage Vcom and the auxiliary electrode voltage Vcs are applied to the data signal line Ls, to the scanning signal line Lg, to the common electrode Ecom and to the auxiliary capacitance line Lcs, respectively. Thereby, voltage corresponding to the digital video signal DV is held in pixel capacity of each sub pixel forming portion 61 and applied to the liquid crystal layer. As a result, a color image indicated by the digital video signal DV is displayed on the display portion 6.

Note that, at the time, each R sub pixel forming portion 61 controls a transmission amount of red light corresponding to voltage held in pixel capacity inside thereof; each G sub pixel forming portion 61 controls a transmission amount of green light corresponding to voltage held in pixel capacity inside thereof; each B sub pixel forming portion 61 controls a transmission amount of blue light corresponding to voltage held in pixel capacity inside thereof; and each Y sub pixel forming portion 61 controls a transmission amount of yellow light corresponding to voltage held in pixel capacity inside thereof.

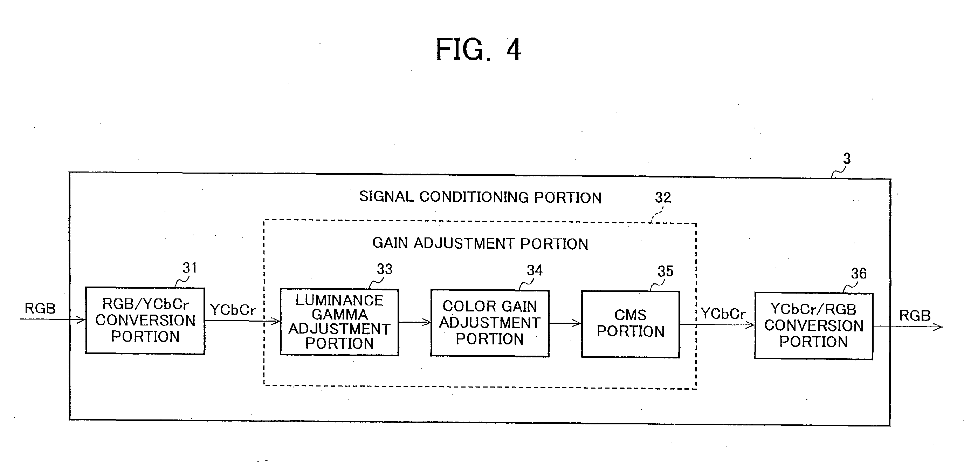

A main characterizing part of the present invention is to allow a desired ratio of primary color to white to be obtained in the display device corresponding to multi-primary color display of RGBY, RGBW, and the like. That is, the ratio of primary color to white at the time of displaying a video image on the display portion 6 is rendered a value adjusted so as to approach a value that is determined in a predetermined video signal format. As a configuration therefor, as shown in Fig. 4, the signal conditioning portion 3 is provided with a gain adjustment portion 32, and the gain adjustment portion 32 is provided with a luminance gamma adjustment portion 33 as an example of a luminance level adjustment portion reducing a luminance level of a luminance signal constituting a video signal. Note that, the luminance level adjustment portion may be not limited to the luminance gamma adjustment portion 33 for adjusting gamma of a luminance signal, and be a luminance gain adjustment portion for adjusting a gain of a luminance signal.

Further, the signal conditioning portion 3 is provided with a color gain adjustment portion 34 corresponding to a first color gain adjustment portion that increases a color gain of a color difference signal forming the video signal for the video signal having the luminance level of the luminance signal reduced at the luminance gamma adjustment portion 33, and a CMS (color management system) portion 35 corresponding to a second color gain adjustment portion that adjusts a gain for each color component of the color difference signal constituting the video signal so that the ratio of primary color to white approaches a value determined in a predetermined video signal format for the video signal having the color gain of the color difference signal increased at the color gain adjustment portion 34. Note that, regarding the above-described processing order, the video signal is standardized also inside the CPU, and if a color gain is increased before reducing a luminance level of a luminance signal, namely, before compressing a luminance signal, clipping (failure) may be caused. Therefore, it needs to compress a luminance signal at the beginning of a series of processing. However, processing of the color gain after luminance signal compression may be performed before or after processing of the CMS, which is not limited to the above-described order.

In the present invention, for example, a user operates a remote control R to perform signal conditioning by the luminance gamma adjustment portion 33, the color gain adjustment portion 34 and the CMS portion 35, and adjusts so that the ratio of primary color to white at the time of displaying a video image on the display portion 6 approaches a value that is determined in a predetermined video signal format. The value determined in the predetermined video signal format is, for example, a ratio of primary color to white in the ITU-R.BT709 standard, and also referred to as a target value in description below.

Note that, signal conditioning processing according to the present invention may be not limited to operation by a user, and allowed to be automatically executed according to an image quality mode, an input signal type, a program genre, and the like. For example, some display devices are allowed to set a plurality of image quality modes for adjusting a display video image quality. These image quality modes are set in consideration of a viewing environment of the display device, a user's request, and the like. For example, a "dynamic (over-the-counter) mode", a "standard (normal) modes, a "movie mode" , a "game mode" and the like are set. These image quality modes, details of setting of these modes and the like are determined by a manufacturer of a display device, and additionally, names of the modes are not standardized, in which various types of mode names are used for respective manufacturers.

In the present invention, signal conditioning may be performed according to an image quality mode to allow video image display at a primary color luminance ratio that is most suitable for the image quality mode. Specifically, for each image quality mode, a sequence of primary color luminance ratio adjustment processing may be performed by the luminance gamma adjustment portion 33, the color gain adjustment portion 34 and the CMS portion 35 to store the adjustment results in a memory (not-shown) for each image quality mode. For example, in the case of the "dynamic (over-the-counter) mode" and the "movie mode", the ratio of primary color to white may be increased to a certain level since a primary color is possibly desired to be exhibited more vividly. Accordingly, an adjustment amount of the primary color luminance ratio may be increased more than that of a primary color luminance ratio in other image quality modes.

Moreover, some display devices are connected to a game machine, a PC (personal computer) or the like in addition to a tuner for receiving a digital broadcast signal to allow a video signal input from the game machine, a video signal input from the PC or the like to be displayed. In the present invention, signal conditioning may be performed according to a type of an input video signal (a television video signal, a game video signal and a PC video signal) so as to allow display of a video image at a primary luminance ratio that is most suitable for the input video signal. In a case where an input video signal is a PC video signal or a game video signal, the ratio of primary color to white may not be increased so much because of including many colors of relatively low color saturation. Accordingly, an adjustment amount of the primary color luminance ratio may be decreased more than that of a primary color luminance ratio in a case where the input video signal is a television video signal.

Further, program genre information of a "movie", a "sport" and the like are added to a digital broadcast signal. In the present invention, signal conditioning may be performed according to a program genre of an input video image so as to allow display of the video image at a primary color luminance ratio that is most suitable for the program genre of the input video image. For example, in a case where the program genre of the input video image is a "movie", the ratio of primary color to white may be increased to a certain level since a primary color is possibly desired to be exhibited more vividly. Accordingly, an adjustment amount of the primary color luminance ratio may be increased more than that of a primary color luminance ratio in the case of other program genres.

In the embodiment, the signal conditioning portion 3 is provided with, in a case where the RGB signal is input, an RGB/YCbCr conversion portion 31 for converting the RGB signal into a YCbCr signal, and the luminance gamma adjustment portion 33 inputs the YCbCr signal converted at the RGB/YCbCr conversion portion 31 to adjust gamma of a luminance signal constituting the YCbCr signal, thereby reducing a luminance level of the luminance signal. Further, the signal conditioning portion 3 is provided with a YCbCr/RGB conversion portion 36 for converting the YCbCr signal after a user adjusts the ratio of primary color to white at the gain adjustment portion 32 into the RGB signal. That is, processing at the luminance gamma adjustment portion 33, the color gain adjustment portion 34 and the CMS portion 35 is executed for a luminance signal (Y) and a color difference signal (CbCr) forming the YCbCr signal.

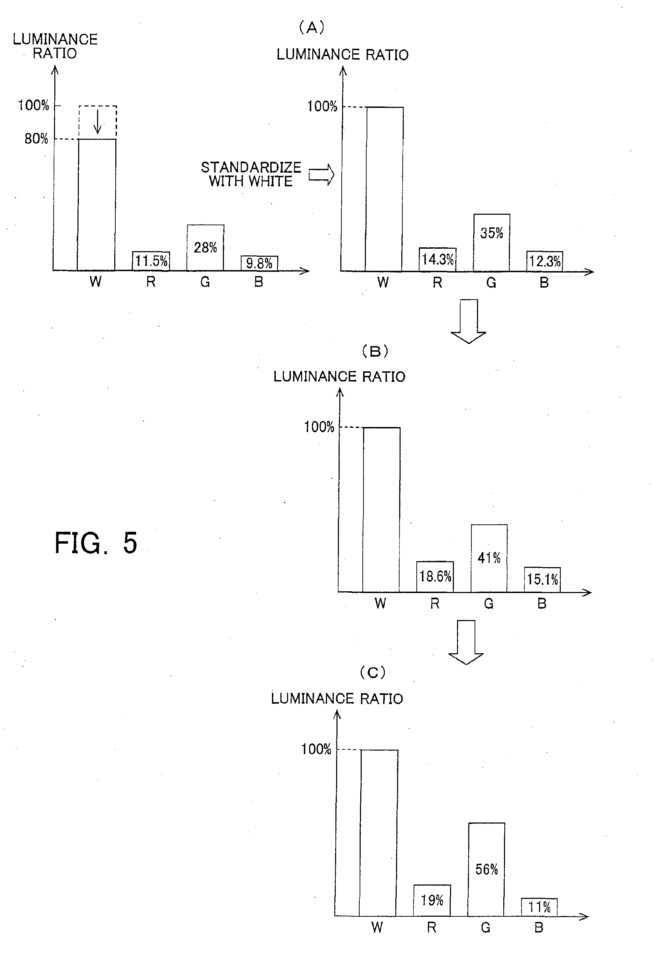

Fig. 5 is a diagram for explaining an example of a primary color luminance ratio adjustment method by the signal conditioning portion 3. In the video signals (Ro, Go, Bo, Yo) converted by the converting circuit 12, as shown in the above-described Fig. 8 (B), when maximum white (W) luminance is 100 %, the luminance ratio of primary colors to white (W) is R:G:B = 12 %: 33 %: 10 %, which shows that the ratio each for red (R) and green (G), in particular, becomes lower compared to the primary color luminance ratio (R:G:B = 19 %: 70 %: 11 %) of the ITU-R.BT 709 standard shown in Fig. 8(A). Therefore, in this example, based on the primary color luminance ratio (R:G:B = 19 %: 70 %: 11 %) on the standard as a target value, a primary color luminance ratio (R:G:B = 12 %: 33 %: 10 %) in four-primary-color display is adjusted.

When a luminance signal is greatly lowered in this case, small amplification is enough for color gain, however, in such a case, sufficient white luminance may not be able to be secured. On the contrary, when a luminance signal is not greatly lowered and white luminance is prioritized, amplification of color gain needs to be increased. However, since a color signal has a limited numerical value from 0 to 255, an amplification amount of a color signal is limited, and thus a desired primary color luminance ratio is not allowed to be secured in some cases. Therefore, the signal conditioning portion 3 makes it possible to obtain a desired primary color luminance ratio while securing a certain level of white luminance only by signal conditioning by executing processing of relatively increasing a primary color luminance ratio by lowering a luminance signal to a certain level and decreasing white luminance and processing of adjustment of a primary color luminance ratio by color gain adjustment for adjusting gain of entire color components and the CMS for adjusting gain for each color component.

Note that, the display device includes a primary color luminance ratio calculation portion for calculating a luminance ratio of primary colors to white at the time of displaying a video image on the display portion 6 based on a result of signal conditioning of each of the luminance gamma adjustment portion 33, the color gain adjustment portion 34, and the CMS portion 35, and is configured to be able to perform signal conditioning of each of the luminance gamma adjustment portion 33, the color gain adjustment portion 34, and the CMS portion 35. A function as the primary color luminance ratio calculation portion is realized by the control portion 4. Specifically, for example, a conversion equation for converting a YCbCr signal composed of a luminance signal and a color difference signal into each of RGBY (red, green, blue, and yellow) primary color signal may be stored in advance in a memory (not-shown) in the control portion 4.

In Fig. 5(A), the luminance gamma adjustment portion 33 adjusts gamma of the luminance signal in the YCbCr signal converted by the RGB/YCbCr conversion portion 31 to reduce a luminance level. The processing is realizable by displaying OSD (On Screen Display) for adjusting gamma of a luminance signal, and operating the remote control R by a user. Note that, a luminance ratio of primary colors to white is changed corresponding to adjustment of a luminance level, however the primary color luminance ratio at the time is calculated by the control portion 4, and a result of which is displayed by the OSD. For example, when maximum white (W) luminance of 100 % in Fig. 8 (B) is lowered by 20 % to 80 %, a luminance ratio of green (G) having a large amount of a luminance component is decreased from 33 % to 28 %, while luminance ratios of red (R) and blue (B) each having a small luminance component are decreased from 12 % to 11.5 % in red (R) and from 10 % to 9.8 % in blue (B), and thus there is little change in this example.

Further, the luminance gamma adjustment portion 33 standardizes white (W). This is processing for regarding 80 % as 100 % in order to make a luminance level 80 % serve as a standard for convenience. Along with this standardization, a primary color luminance ratio of RGB is changed. Specifically, the percentages are changed from 11.5 % to 14.3 % in red (R), from 28 % to 35 % in green (G), and from 9.8% to 12.3 % in blue (B).

Next, in Fig. 5 (B), the color gain adjustment portion 34 adjusts color gain of a color difference signal in the YCbCr signal so as to be increased, which is realizable by displaying OSD (On Screen Display) for adjusting color gain of a color difference signal, and operating the remote control R by a user. Note that, corresponding to adjustment of color gain, a luminance ratio of primary colors to white is changed, and the primary color luminance ratio at the time is calculated by the control portion 4, a result of which is displayed by the OSD. A primary color luminance ratio of RGB is thereby raised, however, red (R) and blue (B) not including so much of luminance component are saturated by increasing color gain, and luminance ratios of which may be too high. The example of Fig. 5 (B) shows that luminance ratios are 18.6 % for red (R), 41 % for green (G), and 15.1 % for blue (B), and a luminance ratio of blue (B) is higher than a target value (11 %).

Next, in Fig. 5 (C) , the CMS portion 35 adjusts gain for each color component of a color difference signal in the YCbCr signal, which is realizable by displaying OSD (On Screen Display) for adjusting gain for each color component of the color difference signal, and operating the remote control R by a user. Note that, a luminance ratio of primary colors to white is changed corresponding to gain adj ustment for each color component, however, the luminance ratio of primary colors is calculated by the control portion 4, which result is displayed on the OSD display. This CMS processing is a known technique as recited, for example, in Japanese Laid-Open Patent Publication No. 2004-64198, which specific description is omitted herein. Generally, in a CMS, a settable range is small and color noise is generated as largely moved, therefore, color gain is increased uniformly by the color gain adjustment portion 33, and thereafter fine adjustment is performed for each hue in the CMS.

In the example of Fig. 5(B), a luminance ratio of red (R) is 18.6 %, and obtained as a value which approximates an almost target value (19 %) is obtained, while having a luminance ratio of green (G) of 41 % which is insufficient for a target value (70 %) as well as a luminance ratio of blue (B) of 15.1 % which is too high for a target value (11 %) . Accordingly, as shown in Fig. 5 (C) , the CMS portion 35 is used to perform fine adjustment of gain of red (R) so as to change the luminance ratio to the target value of 19 %, to increase gain of green (G) so as to change the luminance ratio to 56 %, and to decrease gain of blue (B) so as to change the luminance to the target value of 11 %.

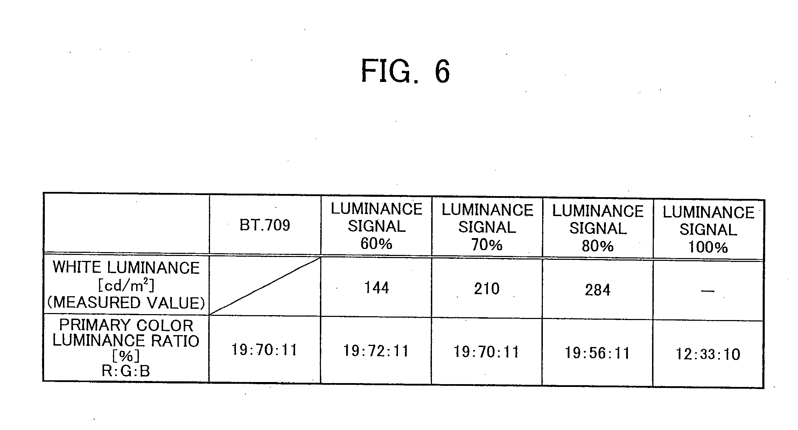

In this example, the luminance value of green (G) is 56% and slightly shifted from the target value of 70 % due to trade-off relation between a primary color luminance ratio and white luminance. This will be specifically described based on Fig. 6.

Fig. 6 is a diagram showing an example of correspondence relation between a primary color luminance ratio and white luminance when a luminance signal is compressed in a varied ratio. The example of Fig. 6 shows a measured value of white luminance and a primary color luminance ratio on each screen where a primary color luminance ratio in a 100 % luminance signal is R:G:B = 12 % : 33 %: 10 %, and the luminance signal is lowered to 60 %, 70 %, and 80 %. Note that, white luminance on the screen (hereinafter, referred to as screen white luminance) was measured with a luminance meter (spectroradiometer for ultra-low luminance SR-UL1R, manufactured by Topcon Technohouse Corporation). Additionally, a target value of a primary color luminance ratio is set to a primary color luminance ratio based on the ITU-R.BT 709 standard (R:G:B = 19 %: 70 %: 11 %).

In Fig. 6, as a first example, when a luminance signal is lowered to 60 %, a measured value of screen white luminance is 144 cd/m², and a primary color luminance ratio is adjusted to R:G:B = 19 % : 72 %: 11 %. Moreover, as a second example, when the luminance signal is lowered to 70 %, a measured value of screen white luminance is 210 cd/m², and a primary color luminance ratio is adjusted to R:G:B = 19 %: 70 %: 11 %. Further, as a third example, when the luminance signal is lowered to 80 %, a measured value of screen white luminance is 284 cd/m², and a primary color luminance ratio is adjusted to R:G:B = 19 %: 56 %: 11 %.

As described above, in the first and second examples, although the primary color luminance ratio is obtained as approximately the same value of the ITU-R.BT 709 standard, a luminance level of the luminance signal is greatly reduced relatively, and thus the screen white luminance is rather insufficient. On the other hand, in the third example, although the primary color luminance ratio is slightly shifted from that of the ITU-R.BT 709 standard, a luminance level of the luminance signal is not greatly reduced, thus having white luminance of 280 cd/m² or more, which is common in viewing at home. Accordingly, sufficient screen white luminance may be obtained. It is possible to obtain a luminance ratio which is close to a desired primary color luminance ratio while securing screen white luminance to a certain level by performing signal conditioning as the third example. In this manner, a luminance level of a luminance signal may be reduced by adjusting gamma so that white luminance on a screen is a predetermined value or more (for example, 280 cd/m² or more) with use of the luminance gamma adjustment portion 33.

As describe above, an RGB signal having a luminance ratio of primary colors to white adjusted by the signal conditioning portion 3 is transmitted to the converting circuit 12 at a later stage, and the RGB signal from the signal conditioning portion 3 is converted into an RGBY signal to be output to the display portion 6 in the converting circuit 12. At the time, a luminance ratio of primary colors to white is adjusted to a desired value in the RGBY signal, and thus, for example, it is possible to obtain a primary color luminance ratio which is similar to that of the ITU-R.BT 709 standard also in four-primary-color display.

Note that, although description has so far been given for the case where a luminance ratio of primary colors to white of R (red) , G (green) , and B (blue) is adjusted, also for primary colors other than those colors, for example, Y (yellow), C (cyan), and M (magenta), it is possible to adjust a luminance ratio of primary colors to white at the time of displaying a video image on the display portion 6.

Hereinabove, the primary color luminance ratio adjustment method by the RGBY type liquid crystal display device has been described, and for example, before product shipment, a series of primary color luminance ratio adjustment processing may be performed by the luminance gamma adjustment portion 33, the color gain adjustment portion 34, and the CMS portion 35 so as to store an adjustment result thereof as default setting in a memory (not-shown) . Thus, after product shipment, a user is able to view a video image with an optimal luminance ratio of primary colors to white without need for performing the primary color luminance ratio adjustment processing.

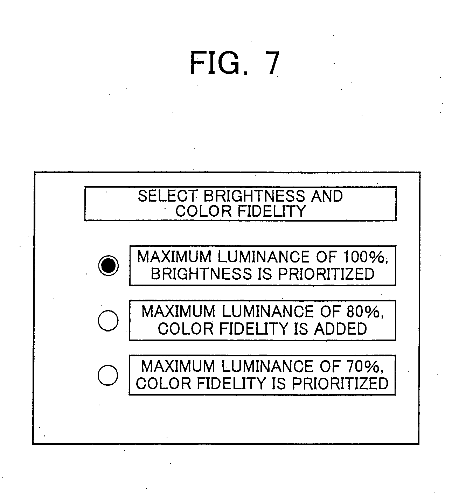

Fig. 7 is a diagram showing an example of a dialogue screen for allowing a user to select luminance and a primary color luminance ratio. For example, each maximum white (W) luminance may be associated with a luminance ratio of primary colors to white (W) to be held as a data table as the above-described adjustment result at a design phase. When a primary color luminance ratio with maximum white (W) luminance of 100 % is R:G:B = 12 %: 33 %: 10 %, according to the example of Fig. 6, a primary color luminance ratio with maximum white (W) luminance of 80 % is R:G:B = 19 %: 56 %: 11 %, and a primary color luminance ratio at maximum white (W) luminance of 70 % is R:G:B = 19 %: 70 %: 11 %.

A user, when desiring to change a luminance ratio of primary colors to white (W) , is able to display the dialogue screen of Fig. 7, and select desired maximum luminance and a primary color luminance ratio from the dialogue screen. Specifically, the user may select "maximum luminance of 100 %, brightness is prioritized" when desiring to prioritize brightness. In this case, a primary color luminance ratio is R:G:B = 12 %: 33 %: 10 %, so that a video image is bright, but has low color saturation of red (R) and green (G) . Additionally, when color fidelity is desired to be added to brightness, "maximum luminance of 80 %, color fidelity is added" may be selected. In this case, a primary color luminance ratio is R:G:B = 19 %: 56 %: 11 %, and thus brightness is slightly decreased, but color saturation of green (G) is increased, thereby making it possible to obtain a video image with color saturation which is close to that of the ITU-R.BT 709 standard. Further, when color fidelity is desired to be prioritized, "maximum luminance of 70 %, color fidelity is prioritized" may be selected. In this case, a primary color luminance ratio is R:G:B = 19 %: 70 %: 11 %, and thus brightness is decreased, but color saturation of green (G) is further increased, thereby making it possible to obtain a video image with color saturation conforming to that of the ITU-R. BT 709 standard.

### EXPLANATIONS OF LETTERS OR NUMERALS

1...drive control circuit; 2...input portion; 3...signal conditioning portion; 4...control portion; 5...light source control circuit; 6...displayportion; 7...color filter; 8...liquid crystal panel main body; 9...backlight light source; 11...display control circuit; 12...converting circuit; 13...data signal line drive circuit; 14...scanning signal line drive circuit; and 15...remote control light-receiving portion.

## Claims

1. A display device comprising a display panel which displays a video image using pixels that include sub-pixels composed of four or more primary colors, wherein
a luminance ratio of primary colors to white at the time of displaying a video image on the display panel is a value adjusted so as to approach a value that is determined in a predetermined video signal format.

2. The display device as defined in claim 1, further comprising a signal conditioning portion which adjusts a video signal composed of a luminance signal and a color difference signal so that the luminance ratio of primary colors to white at the time of displaying a video image on the display panel approaches the value that is determined in a predetermined video signal format, wherein
the signal conditioning portion includes a luminance level adjustment portion which adjusts gamma or gain of a luminance signal composing the video signal to reduce a luminance level of the luminance signal; a first color gain adjustment portion which increases color gain of the color difference signal composing the video signal; and a second color gain adjustment portion which adjusts gain for each color component of the color difference signal.

3. The display device as defined in claim 2, wherein the signal conditioning portion adjusts the luminance ratio of primary colors to white at the time of displaying the video image on the display panel according to a user operation.

4. The display device as defined in claim 2 or 3, wherein the first color gain adjustment portion increases color gain of the color difference signal composing the video signal for the video signal in which the luminance level of the luminance signal is reduced by the luminance level adjustment portion.

5. The display device as defined in claim 4, wherein the second color gain adjustment portion adjusts gain for each color component of the color difference signal and adjusts so that the luminance ratio of primary colors to white approaches the value that is determined in the predetermined video signal format for the video signal in which the color gain of the color difference signal is increased by the first color gain adjustment portion.

6. The display device as defined in any one of claims 2 to 5, wherein the signal conditioning portion includes an RGB/YCbCr conversion portion which converts an RGB signal into an YCbCr signal when the RGB signal is input; and a YCbCr/RGB conversion portion which converts the YCbCr signal adjusted so that the luminance ratio of primary colors to white approaches the value that is determined in the predetermined video signal format into the RGB signal.

7. The display device as defined in any one of claims 2 to 6, wherein the luminance level of the luminance signal is reduced by the luminance level adjustment portion so that white luminance on a screen of the display panel is equal to or more than a predetermined value.

8. The display device as defined in any one of claims 2 to 7, including a primary color luminance ratio calculation portion which calculates the luminance ratio of primary colors to white based on a result of signal conditioning of each of the luminance level adjustment portion, the first color gain adjustment portion and the second color gain adjustment portion, wherein the signal conditioning is allowed to be performed for each of the luminance level adjustment portion, the first color gain adjustment portion and the second color gain adjustment portion while displaying a calculation result by the primary color luminance ratio calculation portion.

9. The display device as defined in any one of claims 1 to 8, wherein the value that is determined in the predetermined video signal format is a luminance ratio of primary colors to white in ITU-R.BT 709 standard.

10. The display device as defined in any one of claims 1 to 9, wherein the sub-pixels included in the pixel include at least RGB three primary colors, and the luminance ratio of primary colors to white is a luminance ratio of the RGB three primary colors.
